Europäisches Patentamt

European Patent Office

Office européen des brevets

(11) Numéro de publication: **0 168 266 B1**

(12) **FASCICULE DE BREVET EUROPEEN**

(45) Date de publication de fascicule du brevet:
04.09.91

(51) Int. Cl.⁵: **G06F 15/62, A41H 3/00**

(21) Numéro de dépôt: 85400526.1

(22) Date de dépôt: **20.03.85**

(54) **Procédé de gradation et découpe automatique d'articles, notamment de pièces de vêtements.**

(30) Priorité: 21.03.84 FR 8404409

(43) Date de publication de la demande:
15.01.86 Bulletin 86/03

(45) Mention de la délivrance du brevet:
04.09.91 Bulletin 91/36

(84) Etats contractants désignés:
BE CH DE GB IT LI

(56) Documents cités:
FR-A- 2 181 009
US-A- 3 391 392
US-A- 3 887 903

(73) Titulaire: **STRUCTURA**
**148, Faubourg Saint-Denis**
**F-75010 Paris(FR)**

(72) Inventeur: **Paly, René**
**44 rue de Lébisey**
**F-14000 Caen(FR)**
Inventeur: **Svanda, Jacques**
**7 rue Notre Dame des Victoires**
**F-75002 Paris(FR)**

(74) Mandataire: **Thévenet, Jean-Bruno et al**
**Cabinet BEAU DE LOMENIE 55 rue d'Amster-**
**dam**
**F-75008 Paris(FR)**

Rank Xerox (UK) Business Services

## Description

La présente invention a pour objet un procédé de gradation et découpe automatique d'articles, notamment de pièces de vêtement, de tailles différentes correspondant à un barême prédéterminé et présentant des proportions semblables à celles d'un modèle de base prédéterminé, procédé selon lequel on procède, pour le modèle de base prédéterminé, à un échantillonnage et à une numérisation de l'image de base du modèle, puis à un enregistrement en mémoire des données numériques représentant l'image de base du modèle, et on introduit dans une mémoire des données représentant, selon le barême prédéterminé, des évolutions des différentes tailles du modèle.

La gradation est l'opération qui consiste à obtenir des tailles différentes, supérieures ou inférieures, en fonction d'un barême préétabli, en partant d'un modèle de base, ou patron, confectionné pour une taille de base, afin de constituer une famille d'articles à deux ou trois dimensions qui sont de tailles différentes mais restent semblables, quant à leur forme, au modèle de base.

Les opérations de gradation sont nécessaires dans tous les domaines où sont fabriqués des gammes d'articles de tailles différentes devant correspondre à un modèle de base, mais la gradation est plus particulièrement délicate lorsqu'il s'agit d'articles devant s'adapter au corps humain et donc évoluer en volume selon des barêmes plus ou moins complexes tenant compte de l'évolution propre de la morphologie du corps humain. Il en est ainsi pour la confection des vêtements ou pour les domaines connexes tels que lingerie, bonneterie, chapellerie, fabrication de chaussures, ou même maroquinerie.

Les vêtements sont généralement confectionnés par assemblage de diverses pièces réalisées chacune à partir d'un patron ou modèle de base, qui se présente sous la forme d'une surface développée plane présentant un contour particulier ainsi que le cas échéant certains repères intérieurs supplémentaires.

Pour chaque pièce de vêtement, la gradation consiste à définir, à partir du modèle de base correspondant à une taille de base, des patrons supplémentaires semblables au modèle de base, mais adaptés aux différentes tailles, afin de permettre ensuite la découpe des pièces, pour les différentes tailles, dans la matière devant constituer le vêtement, qui peut être par exemple, du tissu, du cuir, ou toute matière naturelle ou synthétique souhaitée.

Il est déjà connu de repérer sur le modèle de base des points caractéristiques, dits points de contour dont la connaissance permet de reconstituer intégralement l'image du modèle avec le cas échéant également des repères internes à celui-ci. La gradation consiste alors essentiellement, pour chaque taille différente, à déterminer les points caractéristiques correspondant aux points caractéristiques du modèle de base, à partir de quoi l'image du modèle de base ou patron pour la taille considérée peut être tracée automatiquement, ce qui permet par là-même également une découpe automatique. La détermination des divers points caractéristiques pour les diverses tailles, à partir du modèle de base, reste cependant une opération manuelle, longue et délicate, qui exige un personnel particulièrement qualifié. Il n'est pas rare qu'à la suite d'une gradation manuelle de ce te, l'ensemble des patrons dérivés du modèle de base doivent être retouchés. Dans les cas de procédés de gradation et découpe semi-automatiques où les pièces de vêtement sont directement découpées à partir des images dérivées du modèle de base, sans que des patrons soient réellement matérialisés pour les tailles autres que la taille de base, la nécessité de réaliser une série d'essai conduit non seulement à une perte de temps mais également à une perte de matière.

Le document US-A-3 391 392 décrit un procédé de gradation semi-automatique de pièces de vêtement, selon lequel on procède d'abord à un échantillonnage et à une numérisation du contour de l'image de base du modèle, puis à l'enregistrement en mémoire de données numériques correspondant aux coordonnées de points du contour de cette image de base dans un système de coordonnées cartésiennes. On enregistre ensuite en mémoire des informations de correction fournies par un modéliste pour tous les points caractéristiques du contour et pour chacune des tailles, à l'aide de vecteurs de déport. On réalise ensuite automatiquement à l'aide d'un calculateur une approximation du tracé entre les points caractéristiques successifs dont l'évolution a été fournie de façon manuelle. Ce procédé connu permet ainsi de déterminer automatiquement les caractéristiques des images des articles des différentes tailles à partir des données enregistrées, mais implique la détermination et la saisie manuelles d'un grand nombre d'informations de correction puisque chaque point caractéristique du contour doit faire l'objet d'une information de correction déterminée manuellement pour chaque taille.

La présente invention vise précisément à remédier aux inconvénients précités et à permettre de réaliser automatiquement la découpe d'articles pour diverses tailles caractérisées par des barêmes, à partir de la seule réalisation manuelle d'un modèle de base.

Ces buts sont atteints, conformément à l'invention grâce à un procédé caractérisé en ce que pour chaque taille du modèle on introduit en mémoire une donnée représentant l'évolution d'un paramètre prédéterminé tel que largeur, longueur, tour de poitrine, tour de taille, en ce que l'on détermine une mesure de référence repérable sur un axe défini par deux points géométriquement caractéristiques du modèle de base prédéterminé en ce que l'on enregistre en mémoire une valeur de mesure de référence déterminée pour la taille de base du modèle de base, en ce que l'on détermine à l'aide d'un calculateur les valeurs des mesures de référence correspondant aux différentes tailles choisies, en fonction des données enregistrées représentant les évolutions pour les différentes tailles dudit paramètre prédéterminé et de la valeur enregistrée de la mesure de référence pour la taille de base, la mesure de référence calculée étant déterminée pour chaque taille considérée, par le quotient de la mesure de référence correspondant à la taille de base par la valeur dudit paramètre enregistré relatif à l'évolution des tailles correspondant à la taille de base, lequel quotient étant lui-même multiplié par la valeur du paramètre enregistré relatif à l'évolution des tailles correspondant à la taille considérée, en ce qu'on détermine ensuite les caractéristiques des images des articles des différentes tailles correspondant au modèle de base, à partir des valeurs des mesures de référence des différentes tailles choisies et des données numériques enregistrées représentant l'image de base du modèle par constructions homothétiques dont le rapport est égal au rapport entre la mesure de référence de la taille concernée et la mesure de référence de la taille de base et le centre est déterminé par le point de convergence de droites passant respectivement par les premières et secondes extrémités des segments représentant la mesure de référence pour la taille de base et pour la taille concernée, en ce que l'on procède le cas échéant à des corrections successives des positions de certains au moins des points caractéristiques des images des articles des différentes tailles en fonction de données complémentaires préenregistrées, et en ce que l'on procède directement à une découpe automatique des articles des différentes tailles à partir des caractéristiques des images précédemment déterminées.

Le procédé selon l'invention offre une grande souplesse de mise en oeuvre.

Ainsi, selon une caractéristique particulière, lors de l'enregitrement en mémoire des données numériques représentant l'image de base du modèle, on identifie des points fixes corrigés dont l'emplacement est prédéterminé et reste fixe par rapport à d'autres points caractéristiques de l'image, quelle que soit la taille envisagée, et lors de la détermination des images des articles des différentes tailles, des corrections sont effectuées pour conserver des distances prédéterminées entre les points fixes et les points caractéristiques de l'image à position variable en fonction de la mesure de référence.

Selon une autre caractéristique particulière, lors de l'enregistrement en mémoire des données numériques représentant l'image de base du modèle, on identifie des points corrigés à localisation variable, mais prédéterminée, dont l'emplacement est prédéterminé et varie par rapport à d'autres points caractéristiques de l'image selon une loi de variation particulière enregistrée, en fonction de la taille envisagée, et lors de la détermination des images des articles des différentes tailles, des corrections sont effectuées pour conserver des distances prédéterminées en fonction de ladite loi de variation particulière entre lesdits points corrigés à localisation variable prédéterminée et les points caractéristiques de l'image à position variable en fonction de la mesure de référence.

La loi de variation particulière des points corrigés à localisation variable peut être enregistrée lors de l'introduction dans la mémoire, des données représentant, selon le barême prédéterminé, les évolutions en largeur et longueur des différentes tailles du barême.

La réalisation des corrections par rapport à de simples agrandissements ou réductions par homothétie permet de tenir compte de contraintes particulières liées à la morphologie du corps humair ou à la technique de fabrication des articles.

Par ailleurs, pour toutes les pièces élémentaires composant un même article ou vêtement on affecte une même valeur de mesure de référence de base à chacune des pièces du modèle de base. Ceci permet de réaliser avec rapidité et facilité l'ensemble des pièces d'un même vêtement, par exemple, le dos, le devant, le col, les manches, tout en garantissant que les différentes pièces sont bien assorties et évoluent convenablement dans la mesure où l'évolution de la valeur de la mesure de référence en fonction des tailles a été bien calculée en fonction d'un barême de base.

De plus, le procédé selon l'invention peut être simplifié si pour la détermination des caractéristiques des images des différentes tailles correspondant au modèle de base, on calcule d'abord les coordonnées d'un ensemble de points géométriquement caractéristiques, et on détermine, par interpolation selon des lois de variation prédéterminées établies à partir du modèle de base, des points intermédiaires situés entre les points caractéristiques voisins.

D'autres caractéristiques et avantages de l'invention ressortiront de la description qui fait suite de modes particuliers de réalisation, donnés à titre d'exemple dans le domaine de la confection, en référence au dessin annexé, sur lequel :

- la figure 1 représente un exemple de patron ou modèle de base constitué par un devant de veston,

- les figures 2 et 3 sont des vues schématiques partielles respectivement d'un patron de devant et d'un patron de demi-dos, permettant de voir la détermination d'une mesure de référence,
- les figures 4 à 6 montrent des constructions graphiques illustrant les étapes successives de détermination d'une nouvelle image à partir d'une image de base, a tenant compte de corrections de longueur de taille et de longueur totale, pour un patron de demi-dos, et
- la figure 7 montre me construction graphique illustrant les étapes successives de détermination d'une nouvelle image à partir d'une image de base, a tenant compte de corrections de largeur, pour un patron de devant.

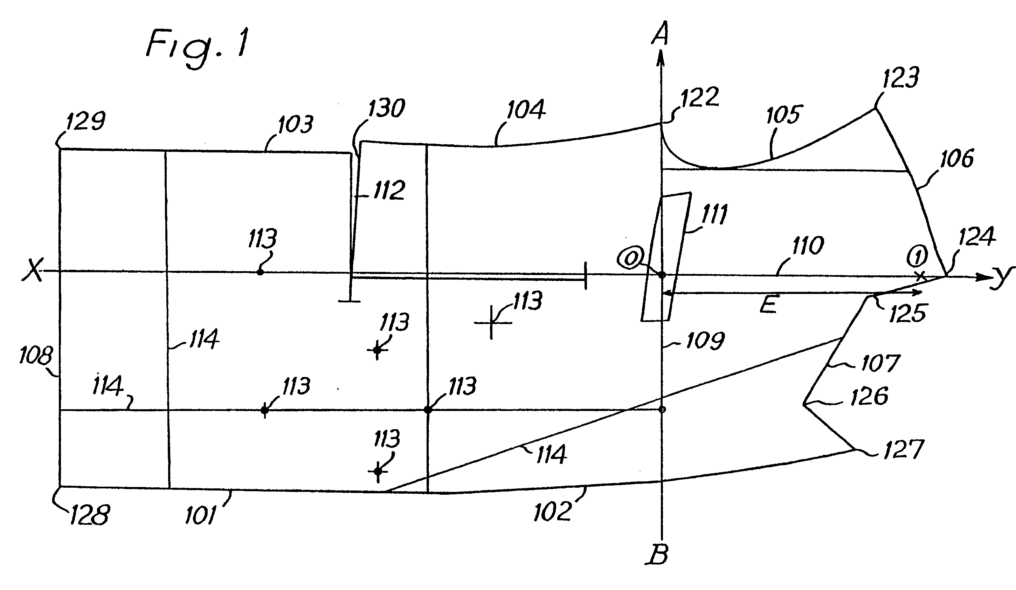

On voit sur la Figure 1 un modèle de base établi pour un devant de veston. Ce modèle de base est défini par un contour comprenant des lignes de bord devant 101, 102, des lignes d'encolure 107, une ligne d'épaule 106, une ligne d'emmanchure 105, des lignes de côté 103, 104 et une ligne de bas 108. Le contour est défini par des points caractéristiques 122 à 130 entre lesquels le contour évolue de façon régulière, soit de façon rectiligne, soit selon une courbure de forme prédéterminée. Diverses lignes intérieures 111, 112, 114 ou divers points intérieurs 113 sont également repérés sur le modèle de base. Ces lignes ou points intérieurs caractérisent certaines particularités du vêtement telles que la présence de poches, boutons, découpes, plis, pinces ou coutures. Deux axes AB et XY sont en outre menés selon les lignes 109 et 110. La ligne 109 correspond à la ligne de profondeur d'emmanchure tandis que la ligne 110 relie la pointe d'encolure 124 à la ligne de profondeur d'emmanchure 109, perpendiculairement à cette dernière. Les deux axes rectangulaires AB XY permettent de définir une mesure de référence E entre les points 0 et 1 comme cela va être expliqué ci-dessous.

Pour chaque article ou groupe d'articles devant faire l'objet d'une gradation, on définit en effet, sur le modèle de base, pour chaque pièce de ce modèle, une mesure de référence E repérable sur un axe tel que XY défini par deux points géométriquement caractéristiques de la pièce considérée du modèle de base. Ainsi, sur la figure 1, l'axe XY est défini par la pointe d'encolure 124 et un point origine constitué par l'intersection entre la ligne de profondeur d'emmanchure 109 et la perpendiculaire passant par le point 124 menée par rapport à la ligne 109.

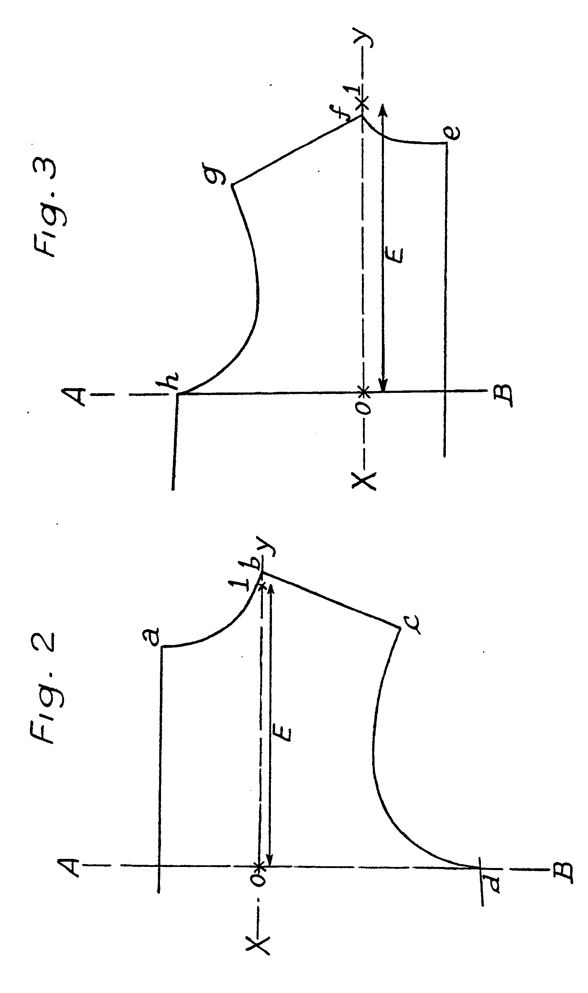

Dans le cas de la figure 1, la valeur de la mesure de référence E pourrait être déterminée par le point origine 0 et par le point caractéristique 124. Ceci n'est toutefois pas indispensable. Ainsi, on a représenté sur les figures 2 et 3 respectivement une pièce de modèle de base constituant un devant et une pièce de modèle de base constituant un demi-dos, les deux pièces correspondant au même vêtement. Dans ce cas, une valeur de mesure de référence E unique doit être déterminée pour ces deux composants d'un même modèle de base comprenant deux pièces d'un même vêtement. Pour chacune de ces pièces de base, la mesure de référence de base est déterminée à partir du point origine 0 constitué par l'intersection de la ligne de profondeur d'emmanchure AB et de la ligne XY perpendiculaire à l'axe AB qui passe par la pointe d'encolure b, respectivement f. La distance séparant la pointe d'encolure b, respectivement f de l'origine 0 est mesurée pour chacune des pièces du modèle de base des figures 2 et 3 et la valeur de la mesure de référence E peut être constituée par exemple par la moyenne des deux valeurs mesurées. Dans ce cas, le point 1 qui détermine avec l'origine 0 la mesure de référence E sur l'axe XY ne coïncide pas avec la pointe d'encolure b, respectivement f.

Dans les cas où un modèle de base comprend un ensemble de pièces différentes destinées à être associées pour constituer un même vêtement, on appliquera la même valeur pour la mesure de référence de base quelle que soit la pièce considérée. Seul le système d'axes sur lequel sera repérée la mesure de référence différera pour les différentes pièces en fonction des diverses configurations de celles-ci.

Comme cela a déjà été indiqué, la gradation consiste à déterminer les dimensions d'un article pour différentes tailles définies par un barème donné. Chaque taille d'article doit naturellement être définie à partir de l'évolution d'un paramètre du corps humain lié à l'article. Ainsi, les diverses tailles de pièces à buste, telles que des chemises, des corsages ou des vestes peuvent être déterminées à partir de l'évolution du tour de poitrine. Pour des pièces à bassin, telles que des jupes ou des pantalons, l'évolution des diverses tailles sera définie à partir de l'évolution du tour de bassin. Pour chaque article d'un type donné, il existe ainsi un barème donnant sous forme de tableaux, les évolutions d'un paramètre caractéristique en fonction des différentes tailles.

Selon l'invention, le processus de gradation peut être effectué automatiquement dès lors que l'on a défini des données d'entrée, à savoir un barème de tailles, une définition de mesure de référence et une forme de modèle de base d'article à confectionner.

La forme du modèle de base peut être déterminée de façon connue en soi par analyse d'image. L'image du modèle de base, par exemple l'image de la figure 1, est échantillonnée, puis les différents points de l'image repérés dans un système de coordonnées sont mis sous une forme numérique pour être enregistrés dans une mémoire au même titre que les informations relatives au barême à utiliser ou à la mesure de référence déterminée sur Le modèle de base. La forme de l'image de base, c'est-à-dire les caractéristiques du patron, peuvent comprendre aussi bien un ensemble de points définissant un contour, que des points particuliers correspondant à des tracés intérieurs au patron. Par ailleurs, l'image de base peut être définie par une succession de points d'échantillonnage permettant de restituer le contour d'un vêtement ou par la combinaison d'un plus petit nombre de points géométriques caractéristiques éloignés les uns des autres et de lois de variation du contour entre points caractéristiques permettant de définir l'emplacement de points intermédiaires plus rapprochés entre deux points géométriques caractéristiques voisins.

Dans un certain nombre de cas, certains points d'un article restent à une distance prédéterminée fixe d'autres points caractéristiques de l'article, quelle que soit la taille. C'est le cas par exemple des remplis devant servir à la réalisation des ourlets. Ces points fixes particuliers sont alors identifiés comme tels lors de leur enregistrement en mémoire. Certains points variables devant évoluer selon une loi de variation propre en fonction des diverses tailles, indépendamment du barême choisi, il est également possible de procéder à une identification de ces points particuliers à loi de variation propre, lors de l'enregistrement en mémoire des données relatives à l'image de base.

Selon l'invention, une fois défini sur le modèle de base, pour une famille donnée d'articles, l'emplacement de la prise de mesure de référence, on procède pour les différentes tailles, en fonction du barême choisi, au calcul de l'évolution de la valeur de la mesure de référence. Ce calcul doit naturellement être effectué à partir de l'évolution d'un paramètre du barême correspondant à une partie du corps dont la morphologie est liée à celle de la pièce sur laquelle on a défini la mesure de référence. Ainsi, pour l'exemple des figures 1 à 3, l'évolution de la mesure de référence peut être définie à partir de l'évolution du tour de poitrine. Connaissant la valeur du tour de poitrine correspondant au modèle de base ainsi que les valeurs du tour de poitrine pour les différentes tailles, la détermination de la valeur de la mesure de référence E pour le modèle de base permet par une simple règle de trois d'obtenir les valeurs de la mesure de référence E adaptées aux différentes tailles du barême.

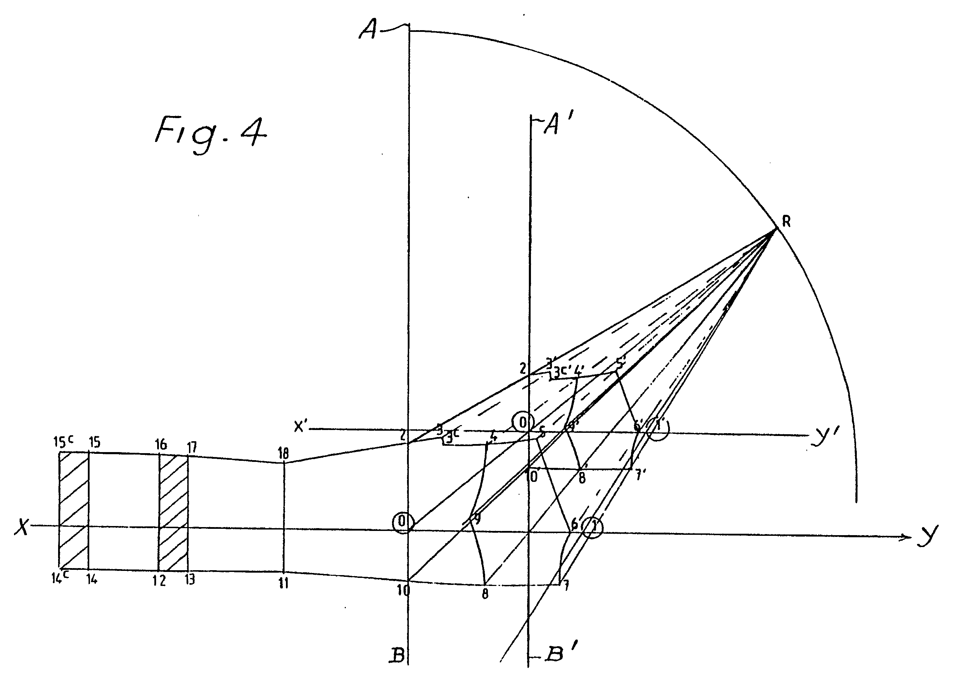

Une fois déterminées les valeurs de la mesure de référence E pour les différentes tailles, et connaissant la forme de l'image de base, les formes des articles correspondants pour les différentes tailles peuvent être déterminées automatiquement à l'aide d'un calculateur, dans la mesure où les différentes formes sont au départ considérées comme homothétiques entre elles, puis soumises éventuellement à une succession de corrections bien déterminées. Pour la clarté des explications, on a représenté sur la figure 4 une méthode graphique de détermination des points d'une pièce de taille plus petite à partir d'une pièce de base définie par les points 2 à 18 et dont la mesure de référence E est définie par les points 0 et 1 positionnés sur un repère défini par les axes AB et XY comme indiqué plus haut. L'image homothétique de l'image de base pour une taille plus petite à laquelle correspond une mesure de référence E' définie par les points 0' et 1' limitant un segment de droite prallèle au segment 01 peut être construite à partir d'un point R placé à une distance de l'origine 0 du premier repère AB, XY de telle manière que R soit le point de convergence des droites 00' et 11'. Les points 2' à 10' de l'image à définir pour la taille plus petite sont déduits des points 2 à 10 correspondants par homothétie de centre R et de rapport 0'1'/01.

En pratique, un certain nombre de correctifs sont cependant à apporter au cours de la détermination des images d'articles correspondant à des tailles différentes de la taille de base. Ces correctifs de longueur ou de largeur visent à respecter certaines contraintes techniques ou morphologiques et également à tenir compte des points fixes ou à variation prédéterminée. Ces correctifs peuvent être déterminés automatiquement par calcul à partir des barêmes complémentaires associés au barême de base et visant notamment à respecter des évolutions particulières propres à certaines parties du corps humain.

A titre d'exemple, dans le cas des pièces des figures 2 et 3, un correctif peut être à apporter moitié sur l'emmanchure devant et moitié sur l'emmanchure dos. Ceci provient de contraintes particulières imposées à l'évolution du développement de poitrine pour les différentes tailles.

Ainsi, à titre d'exemple, pour la taille de base des pièces des figures 2 et 3, la mesure du modèle au niveau de la poitrine, coutures déduites donne une valeur de 44cm. Si la mesure du tour de poitrine est, selon le barême principal adopté, de 32cm pour la taille de base, il s'ensuit que pour la taille de base le développement de poitrine est égale à 12cm.

La formule de base donnant le développement de poitrine pour les différentes tailles correspond au produit du développement de poitrine pour la taille de base et du demi-tour de poitrine de la taille recherchée, divisé par le demi-tour de poitrine de la taille de base.

Or, diverses conditions peuvent être imposées, telles que le fait que, en cas de développement de poitrine pour la taille de base supérieur à 10cm, ce développement ne soit répercuté intégralement que pour les tailles inférieures à la taille de base tandis que pour les tailles supérieures à la taille de base seuls les trois quarts du développement obtenu pour le calcul soient répercutés, mais le développement de la taille extrême supérieure ne pouvant être inférieur à celui de la taille de base.

Dans le cas où le calcul théorique effectué à partir des mesures de tour de poitrine du barème et du développement souhaité ne correspond pas à la valeur pratique obtenue par calcul à partir de l'évolution de mesure de référence, un correctif doit alors être appliqué. Ce correctif peut être par exemple de quelques centimètres. Les barèmes complémentaires prenant en compte des critères tels que celui indiqué ci-dessus permettent de définir avec précision les divers correctifs à apporter à des points particuliers.

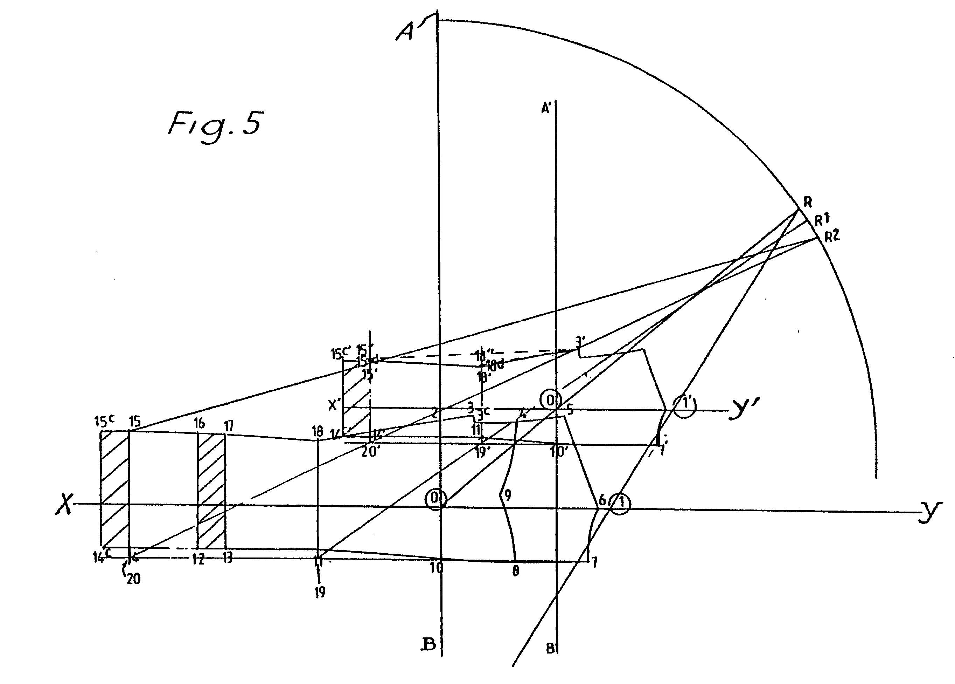

Par ailleurs, il est bien connu que l'évolution en longueur de la taille des êtres humains diffère de l'évolution en largeur. Si l'évolution de la valeur de la mesure de référence en fonction des tailles a bien été calculée à partir d'un barème de base de manière à refléter l'évolution en largeur, des correctifs sont alors à apporter pour la détermination des points caractéristiques définissant la longueur de la pièce de vêtement. Ceci est illustré à titre d'exemple sur la figure 5 qui représente le processus de détermination de points caractéristiques soumis à des correctifs de longueur, en fonction d'un barème complémentaire de correction adjoint au barème principal enregistré en mémoire.

Comme indiqué précédemment en référence à la figure 4, les points 2' à 10' de l'image semblable à l'image de base 2 à 18 ont été déterminés par simple homothétie à partir de la connaissance de l'évolution de la valeur de la mesure de référence E. La figure 5 montre la détermination des points 11', 14' puis 18', 15' correspondant pour la nouvelle taille recherchée aux points 11, 14, 18, 15 du modèle de base. Dans l'exemple considéré, on constatera que l'évolution en longueur est moins rapide que l'évolution en largeur.

Une parallèle à l'axe XY étant menée par le point caractéristique 7 situé à l'intersection de l'encolure et du bord central, les lignes de longueur de taille 11-18 et de longueur totale 14-15 du modèle de base sont prolongées jusqu'à leur intersection aux points 19 et 20 respectivement à la parallèle à l'axe XY menée par le point 7. Les points correspondants 19' et 20' pour l'image à tracer du modèle de base sont déterminés par le report, sur la parallèle à l'axe X'Y' menée par le point 7', de valeurs prédéterminées pour la taille recherchée d'une longueur de taille et d'une longueur totale qui constituent des correctifs de longueur. Le point $R_1$ étant défini par l'intersection entre la droite passant par les points 19 et 19' et l'axe du cercle de centre 0 passant par le point R, le point de cambrage 11' de de milieu de dos pour l'image à tracer est déterminé à partir du point de cambrage 11 du modèle de base par une homothétie de centre $R_1$ et de rapport égal au quotient du segment $R_1.19'$ par le segment $R_1.19$. La connaissance du point 11 permet ensuite de tracer la ligne de taille du point 11' au point 14' et la ligne de milieu de dos du point 11' au point 10'.

De façon similaire, le point 15' concernant la longueur totale pour l'image à tracer est déterminé à partir du point 15 du modèle de base par homothétie de centre $R_2$ et de rapport égal au quotient du segment $R_2.20'$ par le segment $R_2.20$, le point $R_2$ état défini par l'intersection de la droite passant par les points 20, 20' avec l'arc de cercle de centre 0 passant par les points R et $R_1$.

Les constructions graphiques précédentes ne visent qu'à faciliter la compréhension du processus d'élaboration d'une image de taille différente par rapport à un modèle de base. Dans le cas d'un procédé automatique de traitement, les corrections de longueur ou de largeur appliquées à certains points se traduisent en réalité par une modification pour ces points de l'évolution générale de la valeur de la mesure de référence, l'évolution d'une grandeur de substitution bien déterminée (longueur de taille, longueur totale) étant substituée à l'évolution de la mesure de référence, et le centre d'homothétie étant corrélativement légèrement déplacé.

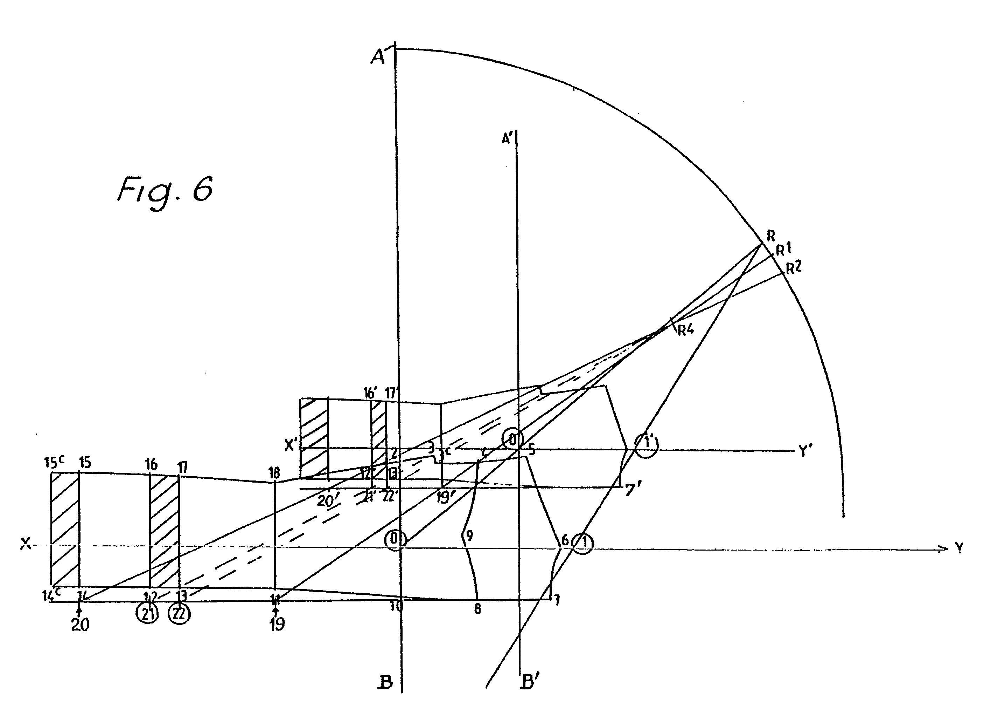

Dans le cas où l'image d'un modèle de base doit être déterminée en appliquant des correctifs de longueur ou de largeur, la position finale des points corrigés ou de points voisins des points corrigés peut être harmonisée avec celle des points déterminés directement en tenant compte de la seule évolution de la valeur de la mesure de référence. Ceci est représenté sur les figures 5 et 6 pour la détermination des points définitifs 15d et 18d correspondant aux points 15, 18 de l'image de base (fig 5) et pour la détermination des points intermédiaires 12', 13', 16', 17' correspondant aux points 12, 13, 16, 17 respectivement de l'image de base (Fig 6).

La largeur du bas de la pièce à constituer, définie par les points 15d et 14' est harmonisée par rapport à la largeur du haut et par rapport à la longueur totale de la pièce. Pour cela, une parallèle à la droite définie par les points 3 et 15 et menée par le point 3' détermine un point 15'' à l'intersection avec la ligne de longueur totale passant par le point 14'. Le point définitif 15d est situé à mi-distance des points 15' et 15''.

Le point de cintrage définitif 18d est lui-même harmonisé en fonction des points 15d et 3'. Pour cela, un premier point 18' est déterminé par l'intersection d'une parallèle à l'axe A'B' passant par le point 11' avec une parallèle passant par le point 15d à la droite définie par les points 15 et 18. Un second point 18'' est déterminé par l'intersection d'une parallèle à l'axe A'B' passant par le point 11' avec une parallèle passant par le point 3' à la droite définie par les points 18 et 3. Le point de cintrage définitif 18d est à mi-chemin entre les points 18' et 18''.

Le quadrilatère 15.15c.14c.14 du modèle de base correspond à un rempli destiné à réaliser un ourlet. Les points 15c et 14c correspondent par conséquent à des points fixes et doivent rester à distance constante des points 15 et 14 ou de leurs images. Ainsi, les points 15c' et 14c' seront déterminés à partir des points 15d et 14' par simple translation. Par ailleurs, la ligne de côté 15c', 15d, 18d, 3' peut être tracée facilement par interpolation une fois terminée la détermination des points caractéristiques 15c', 15d, 18d.

Sur la figure 6, les points 12, 13, 16, 17 déterminent un motif sous forme de bande parallèle au bas de la pièce et devant être positionné et dimensionné en fonction des points 11, 14, 15 et 18. En d'autres termes, la position des points 12, 13 qui définit celle des points 16 et 17 doit être harmonisée en fonction de la position des points 11 et 14 entre lesquels ils sont situés. Pour cela, on définit une homothétie dont le centre $R_4$ est constitué par l'intersection des droites R1-19-19' et R2-20-20'. Si les points 21 et 22 désignent l'intersection des droites 12-16 et 13-17 respectivement avec la parallèle à l'axe XY passant par le point 7, les points 21' et 22' sont déterminés par les intersections des droites R4-21 et R4-22 avec la parallèle à l'axe X'Y' passant par le point 7'. Les points 12, 13', 16', 17' sont alors facilement déterminés comme indiqué sur la figure 6.

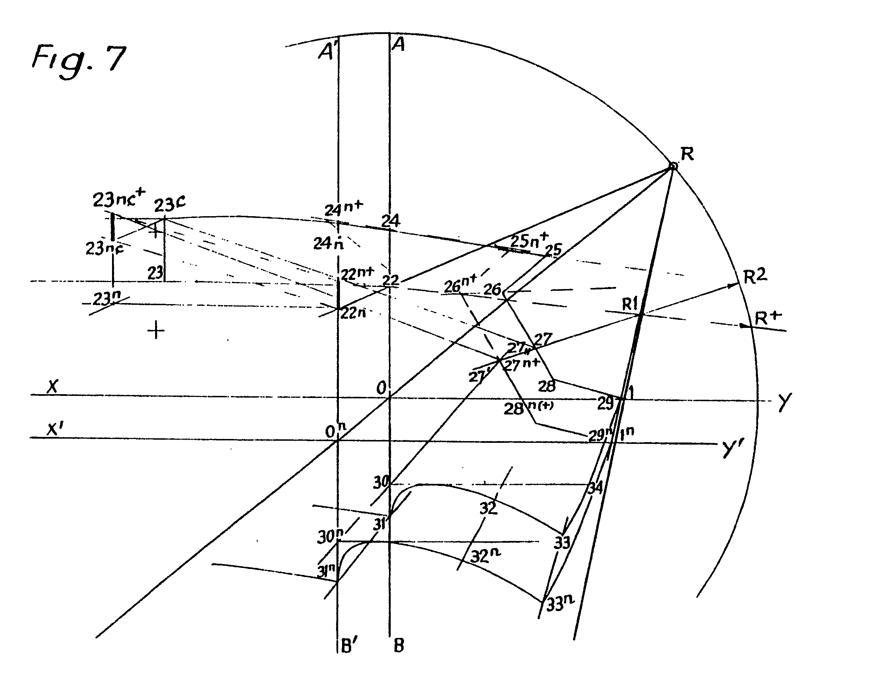

La figure 7 montre un autre exemple de mise en oeuvre du procédé selon l'invention, selon lequel à partir d'un modèle de base défini par les points 22 à 34, on détermine la forme d'une pièce de taille plus grande délimitée par les points numérotés affectés de l'indice n. Le segment 0.1 correspond à la valeur de la mesure de référence pour le modèle de base tandis que le segment 0n.1n correspond, à la valeur de la mesure de référence pour la taille recherchée. Les points 22n, 23n, et 29n à 33n, sont déterminés selon le procédé indiqué plus haut, c'est-à-dire sont déduits des points correspondants 22, 23 et 29 à 33 par une homothétie de centre R et de rapport 0n.1n/0.1, 0n.1n représentant la valeur de la mesure de référence de la taille recherchée et 0.1 la valeur de la mesure de référence de base. En revanche, un correctif de par exemple 3cm est appliqué sur la ligne de milieu de corps définie par les points 22 et 23, ce qui correspond à un correctif en largeur. Les points 22n et 23nc deviennent donc respectivement les points $22n^+$ et $23nc^+$ après application du correctif. Les points voisins corrigés par harmonisation sont affectés de l'indice $n^+$. Le processus d'élaboration de l'image de la taille recherchée avec application d'un correctif de largeur est analogue à celui qui a été décrit en référence à l'exemple des figures 4 à 6. On ne rappellera donc ci-dessous que les quelques règles générales appliquées dans le processus de calcul.

Ainsi, d'une manière générale, quand un point d'une figure géométrique subit un correctif, positif ou négatif, tous les autres points situés entre ce point corrigé et celui de la même figure n'ayant pas subi de correctif subissent également une correction proportionnelle à leur position par rapport au point corrigé. Cette correction est donc d'autant plus grande que le point considéré est plus rapproché du point corrigé. Dans le cas de la figure 7, le correctif positif apporté aux points 22n et 23n entraîne également un correctif des points 23nc, 24n à 27n. Le point $28n^+$ sera lui-même obtenu par l'intersection de la ligne 26n-27n et de la parallèle à la ligne 28-29 menée par le point 29n.

On constate également que, considéré d'un point de vue graphique, pour obtenir la position d'un point dépendant de deux autres points dont l'un a subi un correctif et l'autre non, il convient d'obtenir deux intersections sur la ligne de projection de ce point, l'une définie par une ligne partant du point non corrigé, l'autre définie par une ligne partant du point corrigé. Ainsi, sur la figure 7, le point $27n^+$ dépend du point 29 non corrigé et du point $22n^+$ corrigé. Ce point $27n^+$ est situé à mi-distance des points 27' et 27'' obtenus l'un en traçant une ligne parallèle à la droite 27-29 passant par le point 29n, l'autre en traçant une ligne parallèle à la droite 22-27 passant pr le point $22n^+$, les points 27' et 27'' étant en outre situés sur le rayon coupant au point R2 le cercle de centre 0 passant par le point R (fig 7).

L'application de correctifs selon l'invention permet de procéder par étapes successives, ce qui rend possible un calcul automatique à l'aide d'un ordinateur. Le processus de correction des points successifs selon l'exemple de la figure 7 peut cependant être expliqué de façon graphique. Ainsi, pour la correction des points intermédiaires tels que les points $24n^+$, $25n^+$, $26n^+$, il est d'abord défini un nouveau point $R^+$ sur un cercle de centre 0 passant par le point R. Ce point $R^+$ est déterminé par l'intersection d'une droite passant par le point corrigé $22n^+$ et le point correspondant 22 de la taille de base, et du cercle de centre 0 passant par le point R. La droite $22n^+$-22 coupe au point R¹ la ligne de projection du point 29n non corrigé. Le point R² est obtenu par l'intersection d'une droite passant par le point 27 de la taille de base et le point R¹, et du cercle de centre 0 passant par R. Le point R² sert ensuite pour la projection des points 24n, 25n, 26n situés entre deux points corrigés.

On notera que dans le type de pièce représentée sur la figure 7, les distances entre les points 23 et 23c ou 23n et 23nc sont des constantes. Par ailleurs, les points 23c, 24 à 29 et 31 à 33 définissent un contour tandis que le point 22 est un point interne correspondant par exemple au milieu du devant ou à l'emplacement d'un bouton, et le point 30 est également un point de construction interne.

D'une façon générale, la présente invention permet de déterminer pour différentes tailles, les caractéristiques d'une pièce de vêtement, à partir de la connaissance d'un modèle de base, sans devoir rechercher manuellement, pour chaque taille, les coordonnées de chaque point caractéristique. Selon l'invention, l'adoption d'une mesure de référence définie pour chaque pièce d'article dans un repère lié à cette pièce, permet de réaliser rapidement une gradation a obtenant d'emblée un ensemble de points caractéristiques pour une pièce de taille différente, tout en autorisant des ajustements par corrections et harmonisations successives à partir de barêmes préétablis. Surtout, l'adoption d'une même valeur de mesure de référence pour différentes pièces d'un même modèle de vêtement, malgré des repérages différents des mesures de référence dans des repères propres à chacune des pièces, garantit une harmonie de l'ensemble du vêtement quelle que soit la taille considérée. Les images des pièces définies selon l'invention peuvent ainsi être utilisées directement pour la commande d'une table de découpe sans risque de rebut.

**Revendications**

1. Procédé de gradation et découpe automatique d'articles, notamment de pièces de vêtement, de tailles différentes correspondant à un barême prédéterminé et présentant des proportions semblables à celles d'un modèle de base prédéterminé, procédé selon lequel on procède, pour le modèle de base prédéterminé, à un échantillonnage et à une numérisation de l'image de base du modèle, puis à un enregistrement en mémoire des données numériques représentant l'image de base du modèle, et on introduit dans une mémoire des données représentant, selon le barême prédéterminé, des évolutions des différentes tailles du modèle caractérisé en ce que pour chaque taille du modèle on introduit en mémoire une donnée représentant l'évolution d'un paramètre prédéterminé tel que largeur, longueur, tour de poitrine, tour de taille, en ce que l'on détermine une mesure de référence repérable sur un axe (XY) défini par deux points géométriquement caractéristiques du modèle de base prédéterminé (122, 124; b, d; f, h; 2, 6), en ce que l'on enregistre en mémoire une valeur (E) de mesure de référence déterminée (0-1) pour la taille de base du modèle de base, en ce que l'on détermine à l'aide d'un calculateur les valeurs des mesures de référence (0'-1'; 0''-1'') correspondant aux différentes tailles choisies, en fonction des données enregistrées représentant les évolutions pour les différentes tailles dudit paramètre prédéterminé et de la valeur enregistrée (E) de la mesure de référence (0-1) pour la taille de base, la mesure de référence calculée étant déterminée, pour chaque taille considérée, par le quotient de la mesure de référence correspondant à la taille de base par la valeur dudit paramètre enregistré relatif à l'évolution des tailles correspondant à la taille de base, lequel quotient étant lui-même multiplié par la valeur du paramètre enregistré relatif à l'évolution des tailles correspondant à la taille considérée, en ce qu'on détermine ensuite les caractéristiques des images (2' à 18') des articles des différentes tailles correspondant au modèle de base, à partir des valeurs des mesures de référence (0'-1'; 0''-1'') des différentes tailles choisies et des données numériques enregistrées représentant l'image de base (2 à 18) du modèle par constructions homothétiques dont le rapport est égal au rapport entre la mesure de référence de la taille concernée (0'-1') et la mesure de référence de la taille de base (0-1) et le centre (R) est déterminé par le point de convergence de droites passant respectivement par les premières et secondes extrémités des segments (01, 0'1') représentant la mesure de référence pour la taille de base et pour la taille concernée, en ce que l'on procède le cas échéant à des corrections successives des positions de certains au moins des points caractéristiques des images des articles des différentes tailles en fonction de données complémentaires préenregistrées, et en ce que l'on procède directement à une découpe automatique des articles des différentes tailles à partir des caractéristiques des images (21 à 18') précédemment déterminées.

2. Procédé selon la revendication 1, caractérisé en ce que lors de l'enregistrement en mémoire des données numériques représentant l'image de base du modèle, on identifie des points fixes corrigés dont l'emplacement est prédéterminé et reste fixe par rapport à d'autres points caractéristiques de l'image, quelle que soit la taille envisagée, et en ce que lors de la détermination des images des articles des différentes tailles, des corrections sont effectuées pour conserver des distances prédéterminées entre les points fixes et les points caractéristiques de l'image à position variable en fonction de la mesure de référence.

3. Procédé selon la revendication 1 ou la revendication 2, caractérisé en ce que lors de l'enregistrement en mémoire des données numériques représentant l'image de base du modèle, on identifie des points corrigés à localisation variable, mais prédéterminée, dont l'emplacement est prédéterminé et varie par rapport à d'autres points caractéristiques de l'image selon une loi de variation particulière enregistrée, en fonction de la taille envisagée, et en ce que lors de la détermination des images des articles des différentes tailles, des corrections sont effectuées pour conserver des distances prédéterminées en fonction de ladite loi de variation particulière entre lesdits points corrigés à localisation variable prédéterminée et les points caractéristiques de l'image à position variable en fonction de la mesure de référence.

4. Procédé selon la revendication 3, caractérisé en ce que la loi de variation particulière des points corrigés à localisation variable est enregistrée lors de l'introduction dans la mémoire des données représentant, selon le barème prédéterminé, les évolutions en largeur et longueur des différentes tailles du barème.

5. Procédé selon l'une quelconque des revendications 1 à 4, caractérisé en ce que pour toutes les pièces élémentaires composant un même article ou vêtement on affecte une même valeur de mesure de référence de base à chacune des pièces du modèle de base.

6. Procédé selon l'une quelconque des revendications 1 à 5, caractérisé en ce que pour la détermination des caractéristiques des images des différentes tailles correspondant au modèle de base, on calcule d'abord les coordonnées d'un ensemble de points géométriquement caractéristiques, et on détermine, par interpolation selon des lois de variation prédéterminées établies à partir du modèle de base, des points intermédiaires situés entre les points caractéristiques voisins.

**Claims**

1. Method for the automatic grading and cutting of articles such as garment pieces, of different sizes corresponding to a predetermined scale of sizes and having size proportions similar to those of a predetermined basic pattern, which method consists, for the predetermined basic pattern, in sampling and digitizing the basic image of the pattern, and in storing in a memory digital data representing the basic image of the pattern, and in entering in a memory data representing, according to a predetermined scale, the evolutions in width and in length of the different sizes of the pattern, method characterized in that it further consists, for each pattern size, in entering in a memory data representing the evolution of a predetermined parameter such as the width, length, chest, waist measurement, in determining a reference measurement located on an axis (XY) defined by two points geometrically characteristic of the predetermined basic pattern (122, 124; b, d; f, h; 2, 6), in storing in a memory a predetermined value (E) of reference measurement (0-1) for the basic size of the basic pattern, in determining, by means of a computer, the values of the reference measurements (0'-1'; 0''-1'') which correspond to the different selected sizes, as a function of the stored data representing the evolutions of the different sizes of said predetermined parameter and of the stored value (E) of the reference measurement (0-1) for the basic size, the reference measurement being determined, for each considered size, by the quotient of the reference measurement corresponding to the basic size by the value of said parameter stored in relation to the evolution of the sizes corresponding to the selected size, then in determining the characteristics of the images (2' to 18') of the articles of different sizes corresponding to the basic pattern, from the values of the reference measurements (0'-1'; 0''-1'') of the different sizes selected and of the stored digital data representing the basic image (2 to 18) of the pattern by homothetic constructions whose ratio is equal to the ratio of the reference measurement of the selected size (0'-1') to the reference measurement of the basic size (0-1 and the center (R) is determined by the converging point of straight lines passing respectively through the first and second ends of the segments (01, 0'1') representing the reference measurement for the basic size and for the selected size, in optionally correcting successively the positions of at least some of the characteristic points of the images of the articles of different sizes as a function of prestored additional data, and in directly cutting automatically the articles of different sizes according to the characteristics of the predetermined images (2' to 18').

2. Method according to claim 1, characterized in that when storing in the memory the digital data representing the basic image of the pattern, corrected fixed points are identified, the position of which is predetermined and remains fixed with respect to other characterisric points of the image, whatever the size considered, and in that when determining the images of the articles of different sizes, corrections are made to keep predetermined distances between the fixed points and the characteristic points of the image of variable position as a function of the reference measurement.

3. Method according to claim 1 or claim 2, characterized in that when storing in the memory digital data representing the basic image of the pattern, corrected points of variable but predetermined location are identified, their position being predetermined and varying with respect to other characteristic points of the image according to a particular recorded law of variation, as a function of the selected size, and in that when determining the images of the articles of different sizes, corrections are made in order to keep predetermined distances as a function of said particular law of variation between said corrected points of predetermined variable location and the characteristic points of the image of position varying as a function of the reference measurement.

4. Method according to claim 3, characterized in that the law of particular variation of the corrected points of variable location is recorded when the data representing, according to a predetermined scale, the evolutions in width and in length of the different sizes of the scale, are introduced in the memory.

5. Method according to any one of claims 1 to 4, characterized in that for all the elementary pieces composing one article or garment, the same value of basic reference measurement is assigned to each piece of the basic pattern.

6. Method according to any one of claims 1 to 5, characterized in that in order to determine the characteristics of the images of the different sizes corresponding to the basic pattern, the coordinates of a set of geometrically characteristic points are first calculated, then intermediate points situated between the adjacent characteristic points are determined by interpolation according to predetermined laws of variation established from the basic pattern.

## Patentansprüche

1. Verfahren zur Abstufung und zum automatischen Zuschnitt von Artikeln, insbesondere von Bekleidungsstücken, von unterschiedlicher Größe entsprechend einer vorbestimmten Skala, und ähnliche Proportionen zu denen eines vorbestimmten Basismodells aufweisend, Verfahren, nach dem für das vorbestimmte Basismodell eine Musternahme und eine Digitalisierung des Basisbildes des Modells vorgenommen wird, sodann eine Speicherung der numerischen Daten vorgenommen wird, die dem Basisbild des Modells enspricht, und in einen Speicher Daten eingeführt werden, die gemäß der vorbestimmten Skala Entwicklungen von unterschiedlichen Größen des Modells darstellen, **dadurch gekennzeichnet,** daß für jede Modellgröße eine Angabe abgespeichert wird, die die Entwicklung eines vorbestimmten Parameters, wie bespielsweise der Breite, der Länge, des Brustumfangs, des Taillenumfangs, darstellt, daß ein widerrufbares Referenzmaß auf einer Achse (XY) bestimmt wird, definiert durch zwei geometrische kennzeichnende Punkte des vorbestimmten Basismodells (122,124;b,d;f,h;2,6), daß ein Wert (E) der vorbestimmten Referenzmessung (0-1) für die Basisgröße des Basismodells abgespeichert wird, daß mit Hilfe eines Rechners die Werte der Referenzmessungen (0'-1;0''-1'') bestimmt werden entsprechend den unterschiedlichen gewählten Größen, in Abhängigkeit der abgespeicherten Daten, die den Entwicklungen für die unterschiedlichen Größen des vorbestimmten Parameters und des gespeicherten Werts (E) des Referenzmaßes (0-1) für die Basisgröße entsprechen, wobei das berechnete Referenzmaß für jede betrachtete Größe durch den Quotienten des Referenzmaßes entsprechend der Basisgröße durch den Wert des gespeicherten Parameters, bezogen auf die Entwicklung der Größen, entsprechend der Basisgröße bestimmt wird, wobei der Quotient selbst mit dem Wert des gespeicherten Parameters, bezogen auf die Entwicklung der entsprechenden Größen, zur betrachteten Größe mulitpliziert wird, daß sodann die Eigenschaften der Bilder (2'-18') der Artikel der unterschiedlichen Größen entsprechend dem Basismodell, ausgehend von den Referenzmaßen (0'-1';0''-1'') der gewählten Größen und der gespeicherten numerischen Daten bestimmt werden, die das Basisbild (2-18) des Modells durch homothetischen Aufbau darstellen, dessen Verhältnis gleich dem Verhältnis zwischen dem Referenzmaß der betrachteten Größe (0'-1) und dem Referenzmaß der Basisgröße (0-1) entspricht, und das Zentrum (R) durch den Konvergenzpunkt der Geraden bestimmt wird, die entsprechend durch die ersten und zweiten Enden der Segmente (01,0'1) hindurchtreten, die das Referenzmaß für die Basisgröße und für die betrachtete Größe darstellen, daß gegebenenfalls aufeinanderfolgende Korrekturen von Positionen wenigstens der sicheren der kennzeichnenden Punkte der Bilder der Artikel von unterschiedlicher Größe in Abhängigkeit der voreingespeicherten komplementären Daten vorgenommen werden, und daß unmittelbar ein automatischer Zuschnitt der Artikel von unterschiedlicher Größe, ausgehend von den Eigenschaften der vorher bestimmten Bilder (2'-18'), vorgenommen wird.

2. Verfahren nach Anspruch 1, **dadurch gekennzeichnet,** daß beim Abspeichern der numerischen Daten, die das Bild des Basismodells darstellen, feste korrigierte Punkte identifiziert werden, deren Anordnung vorbestimmt ist und bezüglich anderer das Bild kennzeichnenden Punkte fest bleibt, unabhängig von der beabsichtigten Größe, und daß bei der Bestimmung der Bilder der Artikel von unterschiedlicher Größe Korrekturen ausgeführt werden, um vorbestimmte Abstände zwischen den festen Punkten und den kennzeichnenden Punkten des Bildes mit variabler Position in Abhängigkeit des Referenzmaßes festzuhalten.

3. Verfahren nach Anspruch 1 oder 2, **dadurch gekennzeichnet,** daß beim Abspeichern der numerischen Daten, die das Basismodell darstellen, korrigierte Punkte mit unterschiedlicher, jedoch vorbestimmter Anordnung identifiziert werden, deren Anordnung vorbestimmt ist und bezüglich anderer das Bild kennzeichnenden Punkte gemäß eines bestimmten eingespeicherten Veränderungsgesetzes abgeändert wird, in Abhängigkeit der angestrebten Größe, und daß beim Bestimmen der Bilder der Artikel von unterschiedlicher Größe Korrekturen durchgeführt werden, um die vorbestimmten Abstände in Abhängigkeit des vorgenannten besonderen Variationsgesetzes zwischen den Punkten mit vorbestimmter veränderlicher Anordnungskorrektur und den das Bild kennzeichnenden Punkten mit unterschiedlicher Position in Abhängigkeit des Referenzmaßes festzuhalten.

4. Verfahren nach Anspruch 3, **dadurch gekennzeichnet,** daß das besondere Veränderungsgesetz der korrigierten Punkte mit veränderlicher Anordnung beim Einspeichern der Werte abgespeichert wird, die gemäß der vorbestimmten Skala, die Entwicklungen bzw. Veränderungen in Breite und Länge der unterschiedlichen Größen der Skala darstellen.

5. Verfahren nach einem der Ansprüche 1 bis 4, **dadurch gekennzeichnet,** daß für alle elementaren Teile, die denselben Artikel oder dasselbe Kleidungsstück bilden, eine gleicher Basisreferenzmaßwert auf jedes Teil des Basismodells ausgeführt wird.

6. Verfahren nach einem der Ansprüche 1 bis 5, **dadurch gekennzeichnet,** daß für die Bestimmung der Eigenschaften der Bilder der unterschiedlichen Größen entsprechend dem Basismodell zunächst die Daten einer Anordnung von geometrischen kennzeichnenden Punkten berechnet wird, und durch Interpolation gemäß den vorbestimmten Abwandlungsgesetzen, die, ausgehend von dem Basismodell, eingesetzt wurden, Zwischenpunkte bestimmt werden, die zwischen den benachbarten kennzeichnenden Punkten liegen.

Fig. 1

EP 0 168 266 B1

Fig. 2

Fig. 3

EP 0 168 266 B1

Fig. 4

Fig.5

EP 0 168 266 B1

Fig. 6

EP 0 168 266 B1

Fig. 7

EP 0 168 266 B1